# EUROPEAN PATENT SPECIFICATION

(11) **EP 0 515 318 B1**
(45) Date of publication and mention of the grant of the patent: **26.06.1996**
(21) Application number: 92830139.9
(22) Date of filing: 20.03.1992
(51) Int. Cl.: A23C 19/068, A23C 19/09

(54) **Pasta Filata type cheese including other ingredients**
Pasta-Filata-Typ-Käse enthaltend verschiedene Zutaten
Fromage de type Pasta Filata contenant divers ingrédients

(30) Priority: 23.04.1991 IT MI911126
(43) Date of publication of application: 25.11.1992
(73) Proprietor: Vesely, Marco Emilio, I-20123 Milano (IT); Vesely, Leonardo, I-20123 Milano (IT)
(72) Inventor: Vesely, Marco Emilio, I-20123 Milano (IT); Vesely, Leonardo, I-20123 Milano (IT)
(74) Representative: Righetti, Giuseppe

(56) References cited:
- AU-B- 503 336
- FR-A- 1 445 092
- FR-A- 2 477 380
- GB-A- 1 275 118
- PATENT ABSTRACTS OF JAPAN vol. 13, no. 408 (C-634)(3756) 8 September 1989

## Description

The present invention relates to a new ropy-dough cheese speciality containing ingredients of vegetable and/or animal origin, selected from the group comprising fruit, vegetables, meat, spices, starches, as well as to a process for preparing it.

By "ropy-dough cheese" it is intended all products having a substantially identical technological scheme characterized in particular by the technological step involving "roping" based on the property of casein to be roped, that is formed into filaments or thin threads at a particular moment of treatment and under particular acidity and temperature conditions, that is when the dough has become "mature".

Dough maturation is a phenomenon of partial retexturing of the casein lattice carried out by lactic acid produced by lactic fermentation or added organic acids the action of which consists in catching calcium contained in calcium phosphocaseinate by demineralizing it.

At all events cheeses having varying shapes and sizes are concerned, requiring maturing periods ranging from some hours in case of mild soft cheese (mozzarella, fiordilatte) to some days in case of semisoft cheese (provola) and up to 5-6 months or one year for hard cheese (provolone).

Actually, when ropy-dough cheeses are mentioned, it is necessary to distinguish between soft or semisoft cheeses (cow buffalo milk mozzarella, fiordilatte, scamorza, provola) and hard cheeses (caciocavallo, provolone, burrino). So cow buffalo milk mozzarella is a raw soft cheese exclusively obtained with whole cow buffalo milk and has a globe-like shape exhibiting a thin sheet-like structure. On the other hand, "Fiordilatte" is a soft cheese made of cow milk and generally exhibits a spheroidal and ovoid shape.

In general terms, it is possible to state that all ropy-dough cheeses are obtained by a working scheme essentially comprising the following stages: milk treatment, acidification (with addition of ferments or by means of organic acids such as citric acid), rennet addition, curdling, curd breaking, roping, forming, cooling and hardening, packaging with or without including care liquid. Therefore differences that can be found in the different preparations are due to the type of milk used and the type of technology adopted, and the products thus obtained are quite similar to one another.

GB-A-1275118 discloses a meat product containing flavouring materials, which can withstand storage without separation and segregation of the constituents. Such product is prepared from a mixture of meat, flavouring materials, water and gelatin, to which a cheese (preferably mozzarella) capable of becoming stringy when heated is added.

FR-A-2477380 discloses a food composition based on cheese, tomato (as main ingredient) and other ingredients, such as spices. Such composition is produced by a process comprising the step of preparing, under heating, a mixture of cheese in the form of paste and tomato.

Patent Abstracts of Japan, vol.13, No. 408 (C-634)(3756) 1989, discloses a process for obtaining pasta filler cheese containing food ingredients in uniformely dispersed state and in high ratio (at least 90%) by blending, in a dry state, cheese curd or unaged cheese with various food ingredients. Before blending with ingredients, the curd is kneaded under pressure in hot water to form a curd having excellent plasticity.

AU-B-503336 discloses a process for the production of a pasta filata cheese starting from milk and solves the problem of salting the product in a quicker, more efficient way, by dry-salting a cooked and drained curd, before subjecting the same to mechanical stretching in hot water.

The present invention aimed at finding a new ropy-dough cheese speciality that, while maintaining the characteristics of known foodstuffs, had a different and more savoury taste without however altering the organoleptic properties inherent with the various specialities available on the market long since, was higher in freshness, flavour and structure than known foodstuffs and also offered a lower fat content as compared to known foodstuffs (44-45%).

The intended aim could be surprisingly attained by a cheese speciality exhibiting a nutritional value and overall freshness features that are different and original as compared to those of similar foodstuffs present on the market and to which selected ingredients have been added which are adapted to modify the taste thereof while keeping the typical characteristics of these foodstuffs unchanged. This addition occurs during the cheese preparation steps, that is from the milk base preparation to the cheese hardening, these procedures being well known to those skilled in the art.

However the adopted expedients require particular modalities that could not be foreseen at the present state of the art. Ingredients added during the working can herein be in the form of pieces, as juice, paste or puree, and be natural or synthetic, simple or compound. At all events the final result is a cheese having a new taste even if its appearance is quite similar to normal ropy-dough cheeses.

It is accordingly an object of the present invention a fresh ropy-dough cheese speciality to which, in order to modify the flavour and taste thereof at will, ingredients of vegetable and/or animal origin have been added.

The essential features of the ropy-dough cheese speciality of the present invention are defined in claim 1; specific embodiments of this speciality are defined in dependent claims 2 to 4.

In the new cheese speciality being the object of the invention varying the protein form relative to the one available in the base milk by utilizing powdered low-fat or whole milk, serum proteins, different types of casein, and casein compounds, has been found to be also useful. Likewise varying the lipidic phase by adding animal and/or vegetal fats (either cream or margarine or oils) has proved to be useful.

Furthermore, in order to make the taste of the final product still more agreeable, in addition to milk ferments of different stocks, also natural flavours, colouring agents, bleaches, preserving agents, acidifiers, salt, and sugar, besides the typical ingredients for achieving the desired taste/flavour, has proved to be useful.

It is a further object of the invention a process for the preparation of the above ropy-dough cheese speciality, which process is characterized by the features defined in claim 5.
A particular embodiment of said process is defined in dependent claim 6.

For the cheese speciality the Applicants have selected a type of mixer adapted to ensure the harmonic and synergistic combination of roped dough and ingredients capable of giving the finished product particular and personalized organoleptic features making it distinguishable from all foodstuffs existing on the market.

The particular preparation technology enables a new speciality to be achieved having a peculiar savouriness, a personalized flavour and distinguishable characteristics that make it particularly desirable and attractive, even if, if wished, it may have a lower fat content.

### General Procedure

Stage a): starting from either vaccine, or buffalo, or mixed milk having a 0-10% fat content and 2.5-5% protein content, after filtering, the milk is pasteurized following usual procedures. Once the milk base characteristics have been determined, the milk is brought to a temperature of 33-37°C. Then the inoculation of milk ferments is carried out, which operation generally takes place 20-30 minutes before the addition of rennet so as to give the milk a mass of very active microorganisms that can give fermentation the desired orientation at once.

Generally milk inoculations mainly consisting of St. thermophilus and a minor part of L. helveticus or L. bulgaricus are used. The acidity of these milk inoculations added to the milk at the rate of 2-3%, ranges from 14 to 24°SH/50 ml.

Stage b): rennet of various title and characteristics and in varying doses is then added to the milk. Coagulation taking place at a temperature of about 33-37°C has an average duration of about 45 minutes and enables a soft but elastic curd to be achieved. At all events rennet amount and coagulation temperature and duration may vary depending on the milk characteristics and the particular features to be achieved in the finished product.

After the curd hardening step, the breaking step is carried out. The first breaking together with a short standing (5 to 10 minutes) enables the purging out to start. Then there is a second breaking. The final result is a curd suspension consisting of grains of variable size depending upon the desired final product. Optionally the curd may be allowed to settle on the boiler bottom in order to enable it "to build itself up" and start maturation.

Stage c): once maturation has occurred, the mature or nearly mature curd is cut/ground to sizes ranging between 3 mm³ and 8 cm³. Then ingredients, water heated to 60-95°C and optionally salt are added and the whole is worked so as to have a uniform mixing of the ingredients in the dough.

Stage d): during this step the curd is dipped in hot water so that the dough may reach the appropriate temperature for roping. The produced acidity seizes calcium contained in the casein lattice giving thereby rise to a demineralization process bringing about the disintegration thereof. This phenomenon enables the casein lattice lamellae to slide upon one another enabling the dough "to rope" thereby incorporating the ingredients holding them therein. Once the desired roping degree has been reached, further ingredients can be optionally added again and the ropy-dough cheese speciality is then formed, cooled and hardened depending upon the desired final product. Optionally it may be dipped into a brine having a salt content of 9-10% for achieving the desired salting, then it is submitted to mellowing and optionally smoking.

Stage e): this packaging stage takes place following procedures suitable for preserving this type of foodstuff.

It should be particularly stressed that the addition of ingredients during step c), and optionally during step d) is a completely new procedure, and it was absolutely unexpected that these additions either would not have adversely affected the roping process or would have enabled all the same the achievement of a foodstuff similar to those already on the market while offering at the same time a completely new and agreeable taste.

### EXAMPLE

### Preparation of the milk base

Raw milk having a 3.5% fat content stored at a temperature of 4°C is cleaned and titled so as to bring it to the desired fat and protein content. Milk is then pasteurized and outgassed using appropriate equipments (in order to eliminate therefrom all present odours). Aftewards milk is cooled to the inoculation temperature (35°C) and introduced into maturing tanks provided with sterile overpressured air and previously sanitized using water heated to 85°C.

### Preparation of the curd

Inoculation at the overall rate of 1-3% takes place with milk ferments of different mesophile and thermophile stocks. Then liquid rennet is added at a title of 1:10000 in a proportion of 10-40 ml per 100 litres of milk at pH 6.4. Brief stirring is carried out, then the mixture is allowed to stand and, once the desired consistency has been reached, the curd breaking is executed. The average preparation time is included between 60 and 180 minutes.

### Preparation of the dough

Added to the semifinished product (curd) cut into pieces and ground to sizes of 3 mm³ to 8 cm³ (at the rate of 1 to 50%) are mixtures prepared separately and comprising for example:
- tomato, cream, oregano, basil, salt; or
- salmon, salt, cream; or
- strawberries, cream, salt; or
- frankfurters, cream, salt; or
- tomato puree, sugars, salt, spices, apple vinegar; or
- sauerkraut and optionally salt; or
- ground black olives, cream.
Ingredients may be specific preparations or be purchased on the market, ready for use. Said ingredients are sanitized separately and added when their temperature ranges from 10 to 40°C. Dough obtained from mixing is treated following working systems and conditions enabling the ingredients to be dispersed therein.

### Completion of the foodstuff

To the mixture thus obtained hot water at a temperature of 65-95°C is added in order to achieve roping. The roping liquid, that may be salted or unsalted, can be brought back into the circuit in order to avoid too great a reduction of fat and/or removal of ingredients from the dough being roped. Once the desired roping point has been reached, the ropy and silky dough in which the desired ingredient has been uniformly distributed, is submitted to forming (which forming can be either traditional, or in cakes, or in other desired shapes depending on the intended use). The roping liquid may be one of the ingredients or in other cases may contain an ingredient. Subsequently cooling and hardening in (optionally salted) water is carried out.

### Packaging

Packaging can take place with or without care liquid and in particular the care liquid may contain flavours and/or other ingredients adapted to enhance flavour.

Externally the finished product has a smooth, thin and uniform skin enabling the contained ingredients to be seen. The appearance, consistency, texture and elasticity of the finished product are quite similar to those of traditional products, apart from colour which is the typical colour of the added ingredients.

Obviously the above ingredient list is given by way of example only and does not intend to limit the scope of the present invention.
The described ropy-dough cheese speciality can be used as such or for stuffing food such as pizza, salted pies and cakes, as a filling for pasta, gastronomic preparations and sandwiches, or as a true dressing for typical dishes such as spaghetti and macaroni.

## Claims

1. A fresh ropy-dough cheese speciality essentially consisting of (a) ropy-dough cheese containing live milk ferments and (b) particular ingredients adapted to modify the flavour/taste of said ropy-dough cheese, said ingredients being of vegetable and/or animal origin and being homogeneously distributed in the ropy-dough cheese at a rate of 1 to 50% by weight with respect to the overall mass of ropy-dough cheese.

2. The cheese speciality according to claim 1, wherein said ingredients (b) are selected from the group consisting of fruit, vegetables, meat, spices and starches.

3. The cheese speciality according to claim 1, wherein said ingredients (b) are in the form of pieces, juice, paste or puree.

4. The cheese speciality according to claim 1, wherein said ingredients (b) are:
- tomato, cream, oregano, basil, salt; or
- salmon, salt, cream; or
- strawberries, cream, salt; or
- frankfurters, cream, salt; or
- tomato puree, sugars, salt, spices, apple vinegar; or
- sauerkraut; or
- ground black olives, cream.

5. A process for preparing the fresh ropy-dough cheese speciality according to one or more of claims 1 to 4, said process comprising the following working stages:
(a) preparation of a milk base including cleaning, titring, pasteurizing and cooling the milk;
(b) preparation of a curd including inoculation of milk ferments of different mesophile and thermophile stocks, addition of rennet, thus obtaining a soft but elastic curd, and breaking of the obtained curd, wherein the average preparation time ranges between 60 and 180 minutes;
(c) preparation of a dough including cutting the curd prepared in stage (b) as far as sizes between 3 mm³ and 8 cm³ are reached, adding to the curd selected ingredients of vegetable and/or animal origin at a rate of 1 to 50% by weight with respect to the dough to be roped, and water heated to 60-95°C, said ingredients being cut into pieces and/or ground, or in the form of juice, paste or puree, and mixing the added ingredients with the curd;
(d) adding water at 65-95°C to the dough prepared in stage (c), roping said dough and forming, cooling and hardening the roped dough; and
(e) packaging the formed, cooled and hardened roped dough obtained in stage (d).

6. The process of claim 5, wherein in stage (c) the ingredients are added to the curd when their temperature is between 10 and 40°C.

## Patentansprüche

1. Pasta-Filata-Typ Frischkäse, zusammengesetzt im wesentlichen aus lebende Milchfermente enthaltendem Pasta- Filata-Käse (a) und besonderen Zutaten (b), die geeignet sind, das Aroma/den Geschmack des Pasta-Filata-Käses zu ändern, wobei diese Zutaten pflanzlichen und/oder tierischen Ursprunges sind und gleichmäßig im Pasta-Filata-Käse mit einem Gewichtsanteil von 1 bis 50% gegenüber der Gesamtmasse des Pasta-Filata-Käses verteilt sind.

2. Typ-Käse nach Anspruch 1, dadurch gekennzeichnet, daß die Zutaten (b) ausgewählt sind unter der Gruppe bestehend aus Früchten, Gemüse, Fleisch, Gewürzen, und Stärken.

3. Typ-Käse nach Anspruch 1, dadurch gekennzeichnet, daß die Zutaten (b) in der Form von kleinen Stücken, Saft, Teig oder Püree vorliegen.

4. Typ-Käse nach Anspruch 1, dadurch gekennzeichnet, daß die Zutaten (b) folgende sind:
- Tomaten, Sahne, Oregano, Basilikum, Salz; oder
- Lachs, Salz, Sahne; oder
- Erdbeeren, Sahne, Salz; oder
- Würstel, Sahne, Salz; oder
- Tomatenpüree, Zucker, Salz, Gewürze, Apfelessig; oder
- Kraut; oder
- zerkleinerte schwarze Oliven, Sahne.

5. Verfahren zur Herstellung von Pasta-Filata-Typ-Käse, nach einem oder mehreren Ansprüchen von 1 bis 4, wobei das Verfahren die folgenden Arbeitschritte umfaßt:
(a) Zubereitung einer Milchbasis, umfassend die Reinigung, die Titolation, die Pasteurisierung und die Abkühlung der Milch;
(b) Zubereitung einer Koagulation, umfassend die Einimpfung von Milchfermenten verschiedener mesophiler und thermophiler Stämmen, mit Zusatz von Lab, wobei somit eine lockere, jedoch elastische Koagulation erhalten wird, und mit Bruch der erhaltenen Koagulation, wobei die Durchschnittszeit zur Zubereitung zwischen 60 und 180 Minuten liegt;
(c) Zubereitung einer Pasta, umfassend den Schnitt der zubereiteten Koagulation im Arbeitsschritt (b) bis die Abmessungen zwischen 3 mm³ und 8 cm³ erhalten werden, wobei der Koagulation ausgewählte Zutaten pflanzlichen und/oder tierischen Ursprungs mit einem Gewürzanteil von 1 bis 50% gegenüber der zu ziehenden Pasta und bis 60 - 95° C erhitztes Wasser zugefügt werden, wobei die Zutaten in Stücke geschnitten und/oder gehackt werden, oder in der Form von Saft, Teig oder Püree, und wobei die hinzugefügten Zutaten mit der Koagulation vermischt werden;
(d) Beimischung von Wasser um 65 - 95° C zur zubereiteten Pasta beim Arbeitsschritt (c), Ziehen der Pasta und Formung, Abkühlung und Verfestigung der gezogenen Pasta; und
(e) Verpackung der beim Arbeitsschritt (d) erhaltenen, geformten, abgekühlten und verfestigten, gezogenen Pasta.

6. Verfahren nach Anspruch 5, dadurch gekennzeichnet, daß beim Arbeitsschritt (c) die Zutaten der Koagulation zugefügt werden, wobei ihre Temperatur zwischen 10° und 40° C beträgt.

## Revendications

1. Fromage frais typique se composant essentiellement (a) de fromage de type Pasta Filata contenant des ferments lactiques vifs, et (b) d'ingrédients particuliers adaptés a modifier le parfum/goût dudit fromage de type Pasta Filata, lesdits ingredients étant d'origine végétale et/ou animale et étant distribués de manière homogène dans le fromage de type Pasta Filata selon un pourcentage de 1 a 50% en poids par rapport à la masse totale du fromage de type Pasta Filata.

2. Fromage typique selon la revendication 1, caractérisé en ce que lesdits ingrédients (b) sont choisis parmi le groupe comprenant fruits, légumes, viande, épices et amidons.

3. Fromage typique selon la revendication 1, caractérisé en ce que lesdits ingrédients (b) sont sous forme de morceaux, jus, pâte ou purée.

4. Fromage typique selon la revendication 1, caractérisé en ce que lesdits ingrédients (b) sont:
- tomate, crème, origan, basilic, sel; ou
- saumon, sel, crème; ou
- fraises, crème, sel; ou
- saucisses de Strasbourg, crème, sel; ou
- purée de tomate, sucres, sel, épices, vinaigre de pommes: ou
- choucroute; ou
- olives noires hachées, crème.

5. Procédé pour la préparation de fromage frais typique, de type Pasta Filata, suivant une ou plusieurs des revendications 1 a 4, ledit procédé comprenant les étapes de travail suivantes:
(a) préparer une base de lait comportant purification, titrage, pasteurisation et refroidissement du lait;
(b) préparer un caillot comprenant l'inoculation de ferments lactiques de différentes souches mésophiles et thermophiles, l'addition de présure obtenant ainsi un caillot moelleux mais élastique, et la rupture du caillot obtenu, où le temps moyen de préparation se si tue entre 60 et 180 minutes;
(c) préparer une pâte comprenant la rupture du caillot préparé a l'étape (b) jusqu'à obtenir des dimensions entre 3 mm³ e 8 cm³, ajoutant au caillot des ingrédients sélectionnés d'origine végétale et/ou animale selon un pourcentage de 1 à 50% en poids par rapport à la pâte a filer, et de l'eau chauffée à 60-95°, lesdits ingrédients étant partagés en petits morceaux et/ou hachés, ou étant sous forme de jus, pâte ou purée, et mélanger les ingrédients ajoutés au caillot;
(d) ajouter de l'eau a 65-95°C a la pâte préparée à l'étape (c), filer ladite pâte et former, refroidir et durcir la pâte filée; et
(e) emballer la pâte filée formée, refroidie et durcie, obtenue a l'étape (d).

6. Procédé selon la revendication 5, caractérisé en ce qu'à l'étape (c) les ingrédients sont ajoutés au caillot quand leur température est entre 10 et 40°C.
